# EUROPEAN PATENT SPECIFICATION

(11) **EP 1 484 175 B1**
(45) Date of publication and mention of the grant of the patent: **06.10.2010**
(21) Application number: 04252365.4
(22) Date of filing: 22.04.2004
(51) Int. Cl.: B32B 15/08

(54) **Decorative sheet**
Dekorschicht
Feuille décorative

(30) Priority: 04.06.2003 JP 2003159054
(43) Date of publication of application: 08.12.2004
(73) Proprietor: Nakagawa Chemical Inc., Tokyo 103-0004 (JP)
(72) Inventor: Nakagawa, Yukiya, Choyoda-ku, Tokyo 103-0004 (JP)
(74) Representative: Brookes Batchellor LLP

(56) References cited:
- DE-A- 19 935 500
- FR-A- 2 685 351
- US-A- 4 247 589
- US-A- 5 344 671
- DATABASE WPI Section Ch, Week 199039 Derwent Publications Ltd., London, GB; Class M13, AN 1990-294730 XP002292813 & JP 02 207873 A (IWATANI KAGAKU KOGY) 17 August 1990 (1990-08-17)
- PATENT ABSTRACTS OF JAPAN vol. 2000, no. 16, 8 May 2001 (2001-05-08) & JP 2001 001444 A (DAINIPPON PRINTING CO LTD), 9 January 2001 (2001-01-09)
- DATABASE WPI Section Ch, Week 197902 Derwent Publications Ltd., London, GB; Class A97, AN 1979-03357B XP002292814 & JP 52 094211 A (OGI H) 8 August 1977 (1977-08-08)
- DATABASE WPI Section Ch, Week 197825 Derwent Publications Ltd., London, GB; Class A89, AN 1978-45054A XP002292815 & JP 53 053322 A (SUZUKI Y) 15 May 1978 (1978-05-15)

## Description

### BACKGROUND OF THE INVENTION

The present invention relates to a decorative sheet for decorating the surface of a building construction or the like, and more particularly to a decorative sheet for providing the surface with a metallic appearance.

It is general to adhere a decorative sheet to the surface of a building construction or the like to apply colors or patterns to the construction. In particular, when giving a metallic appearance to the surface, a thin metal layer is often formed on a plastic support plate so as to reduce the weight, but since the decorative effect is monotonous only by providing the color or gloss of the material supplied merely by the metal layer, it is attempted to form irregularities on the surface or process various patterns thereon. A prior art disclosed in Japanese Patent Application Laid-open No. 2001-1444 will be hereinafter explained by referring to Fig. 1. A transparent synthetic resin film L1 having a fine grinding pattern L1a formed on the lower side thereof is formed at the uppermost layer, sequentially there are downwardly provided with a metal thin film layer L3 having a metallic feel through a primer layer L2 following the grinding pattern L1a, a decorated layer (support layer) L4 made of plastic film or the like, and an adhesive layer L5. This decorative sheet is adhered to a substrate (member to be decorated) B by the adhesive layer L5. According to such a decorative sheet, the layer L3 having a metallic feel is coated with the transparent synthetic resin film L1
having the grinding pattern L1a, so that the color or gloss of the metal material can be accentuated, and the obtained metallic feel can be maintained stably.

When a metal oxidizes, various colors are presented depending on the type of metal, but generally a grave and quiet color is present, which has been traditionally favored by many people. The coloring technique by oxidizing a metal has been well known for long. Hitherto, the demanded value for a decorative sheet is to maintain the decorative effect stably, and it is the same in the decorative sheet for giving a metallic appearance. On the basis of recognition that promotion of oxidation of the layer giving a metallic feel leads to deterioration of the decorative material, the surface of the metal layer has been generally coated with a transparent synthetic resin or the like as mentioned in the above prior art.

In such a conventional decorative sheet, there occurs a problem that the value as a decorative material is extremely lowered when the surface coating layer is contaminated, so that surface cleaning is necessary for maintaining this value, and the maintenance requires much time and labor. Besides, since the appearance of the decorative sheet is not changed unless it is replaced, there occurs another problem that the interest dwindles down during continued viewing.

The reader is referred to DATABASE WPI Section Ch, Week 199039 Derwent Publications Ltd., London, GB; Class M13, AN 1990-294730 XP002292813 & JP 02 207873 A (IWATANI KAGAKU KOGY) 17 August 1990 (1990-08-17), US-A-5 344 671 (WOTTRICH GUENTHER) 6 September 1994 (1994-09-06), FR-A-2 685 351 (SAUVEGRAIN CHRISTIAN) 25 June 1993 (1993-06-25) and DATABASE WPI Section Ch, Week 197825 Derwent Publications Ltd., London, GB; Class A89, AN 1978-45054A XP002292815 & JP 53 053322 A (SUZUKI Y) 15 May 1978 (1978-05-15).

### SUMMARY OF THE INVENTION

In the background of these problems, the present invention is intended to solve the problems by a novel concept introducing a completely opposite philosophy of the value, and it is hence an object thereof to provide a maintenance-free decorative sheet by positively making use of time-course changes of metallic tone as appearance changes, thereby allowing viewers to enjoy the time-course changes of appearance of the decorative material.

To achieve the above object, the present invention comprises the features as set forth in the following respective aspects.

A first aspect of the present invention is concerned with a decorative sheet comprising a sheet-like supportmember, a sticky layer formed on one side of the sheet-like support member, and a metal exposed layer formed of metal or metal compound granules stuck on the sticky layer, wherein the metal exposed layer has an exposed surface so that the metal or thegranules can be oxidized.

A second aspect of the present invention is concerned with the decorative sheet according to the first aspect, wherein the sheet-like support member is a plastic film, and the sticky layer is a layer in which metal or metal compound granules are mixed at least in a sticky agent, so that irregularities can be formed on the surface by the metal or the granules.

A third aspect of the present invention is concerned with the decorative sheet according to the first or second aspect, wherein the sheet-like support member is a.plastic film, and the sticky layer is a layer in which a mixing material to form an irregular surface is mixed in a sticky agent.

A fourth aspect of the present invention is concerned with the decorative sheet according to any one of the first to third aspects, wherein an adhesive layer is formed on the other side of the sheet-like support member.

A fifth aspect of the present invention is concerned with a method of manufacturing a decorative sheet, comprising the steps of sticking metal or metal compound granules on a sheet- like support substrate through a sticky layer, which is formed on one side of the sheet-like support substrate, and forming a metal exposed layer with the surface exposed so that the metal or the granules can be oxidized.

A sixth aspect of the present invention is concerned with the method of manufacturing a decorative sheet according to fifth aspect, wherein the step of forming the metal exposed layer comprises a step of dusting the metal or metal compound granules over the sticky layer.

A seventh aspect of the present invention is concerned with the method of manufacturing a decorative sheet according to the fifth or sixth aspect, wherein the sticky layer is a layer in which a mixing material made of a metal or metal compound, pigment, resin granules, wood chips or the like is mixed in a sticky agent, the sticky layer being formed on the sheet-like support substrate prior to the step of forming the metal exposed layer.

An eighth aspect of the present invention is concerned with the method of manufacturing a decorative sheet according to any one of the fifth to seventh aspects, wherein irregularities are formed on the sticky layer prior to the step of forming the metal exposed layer.

A ninth aspect of the present invention is concerned with the method of manufacturing a decorative sheet according to the fifth aspect, wherein the step of forming the metal exposed layer comprises the steps of supplying the sheet-like support substrate between a conveying roller of the sheet-like support substrate and an adsorbing roller having the metal or metal compound granules adsorbed on a surface thereof, and sticking the metal or metal compound granules adsorbed on the adsorbing roller on the sticky layer.

A tenth aspect of the present invention is concerned with the method of manufacturing a decorative sheet according to the ninth aspect, wherein irregularities are formed on the surface of the adsorbing roller, and irregularities are formed on the metal exposed layer by transferring the irregularities of the adsorbing roller on the sticky layer.

The present invention as set forth in the above aspects produces the following operations and effects.

First of all, since the surface layer of the decorative sheet has a metal exposed layer having metal or metal compound granules exposed on the surface so as to be oxidized, the metal or metal compound granules on the surface of the decorative sheet are always exposed to the ambient environment, and the appearance is changed in the time course while promoting reaction of oxidation or the like. The time-course appearance changes of the metal or metal compound give a deeper feel to the metallic tone, and a quiet atmosphere is created. As a result, the modern scenery or indoor atmosphere may be accentuated, and an effective decoration is realized. Since the appearance change is slow but basically continues to progress without stopping, the change can be enjoyed without boringness. Further, even if the surface of the decorative sheet is contaminated, the surface change by contamination is appreciated as an effective appearance change, so that no particular maintenance is needed, and moreover the use for a long period of time is assured. Therefore, maintenance-free use is guaranteed for a long time, and the cost performance is very high.

Further, the entire weight can be reduced by using a plastic film for forming the sheet-like support member. In addition, a solid feel can be given by forming the sticky layer as the base for forming the metal exposed layer and having a mixing material mix in a sticky agent to form an irregular surface. By further forming irregularities on the surface, varied decorative effects can be given. Also by forming an adhesive layer on the other side of the sheet-like support member, it is easier to adhere to the object of decoration.

According to the method of manufacturing a decorative sheet in the present invention, metal or metal compound granules are stuck on a sheet-like support substrate having a sticky layer formed on one side thereof, thereby forming a metal exposed layer exposed on the surface so that the metal or the granules can be oxidized.

The sticky layer is formed as a layer in which a mixing material made of a metal or metal compound, pigment, resin granules, wood chips or the like is mixed in a sticky agent, on the sheet-like support substrate prior to the step of forming the metal exposed layer. At this time, prior to the step of forming the metal exposed layer, the other irregularities may be further formed on the sticky layer with the irregular surface.

The forming step of metal exposed layer may comprise a step of dusting the metal or metal compound granules over the sticky layer, or steps of supplying the sheet-like support member between a conveying roller of the sheet-like support member and an adsorbing roller having the metal or metal compound granules adsorbed thereon, and then transferring the metal or metal compound granules adsorbed on the adsorbing roller onto the sticky layer.

By forming irregularities on the surface of the adsorbing roller and forming irregularities on the sticky layer by pressuring, heating and transferring the irregularities of the adsorbing roller onto the sticky layer, the granules held on the adsorbing roller can be stuck on the sticky layer, so that irregularities may be formed on the metal exposed layer. As a result, the decorative effect can be emphasized by the irregularities formed on the surface, and continuous forming is possible, so that the productivity may be enhanced.

### BRIEF DESCRIPTION OF DRAWINGS

These and other objects and advantages of the present invention will become clear from the following description with reference to the accompanying drawings, wherein:
Fig. 1 is an explanatory view of a prior art;
Fig. 2 is an explanatory view of a decorative sheet according to one embodiment of the present invention;
Fig. 3 is an explanatory view showing a method of manufacturing a decorative sheet according to one embodiment of the present invention; and
Fig. 4 is an explanatory view showing the method of manufacturing a decorative sheet according to another embodiment of the present invention.

### DETAILED DESCRIPTION OF THE PREFERRED EMBODIMENTS

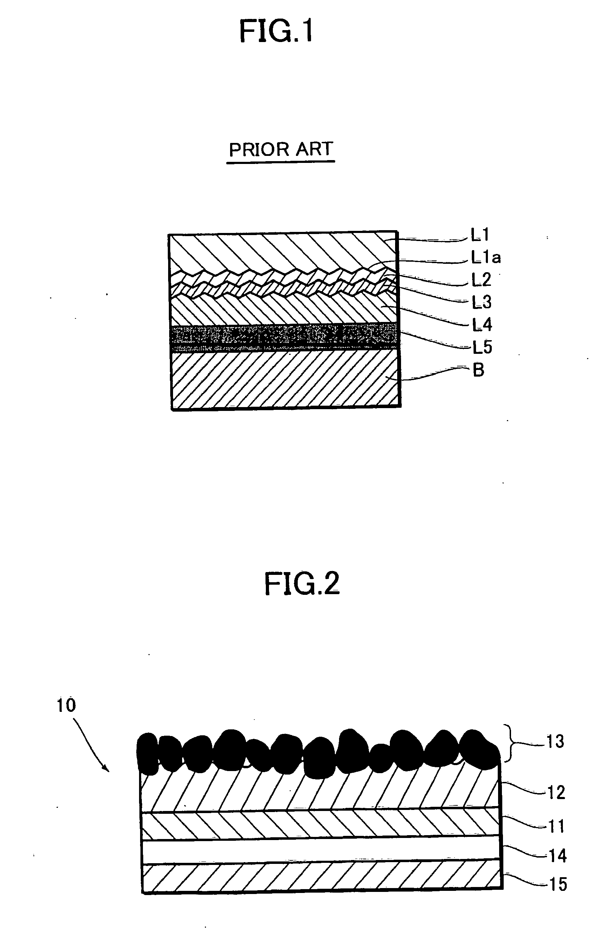

Preferred embodiments of the present invention will be described below with reference to the accompanying drawings. Fig. 2 is a sectional view showing a structure of a decorative sheet according to one embodiment of the present invention. A decorative sheet 10 has a sticky layer 12 formed on one side of a sheet-like support member 11, and a metal exposed layer 13 stuck with metal or metal compound granules is formed on the sticky layer 12. An adhesive layer 14 is formed on the other side of the sheet-like support member 11, and a releasing layer 15 is formed so as to cover the adhesive layer 14.

The metal exposed layer 13 forms a layer exposed on the surface of the decorative sheet 10 in a state in which metal or metal compound granules stuck on the sticky layer 12 can be oxidized. The metal or metal compound to be used preferably presents various colors in the process of oxidation, but it is not particularly specified. Examples include iron which presents a black or brown color by oxidation, and copper which presents a blue color by oxidation. It is a feature of the embodiment that the metal exposed layer 13 is always exposed to the atmosphere to promote reaction of oxidation or the like continuously, and therefore it is important that the metal or metal compound granules are not completely enveloped by the resin of the sticky layer 12.

The sticky layer 12 is a layer for sticking the metal or metal compound granules to the sheet-like support member 11, and it can be formed of a resin layer which is sticky, and hardens after sticking, and thus fixes the metal or metal compound granules. Examples include urethane, polyester resin, others having a reactive -OR radical or - COOH radical, two-component curing sticky agent cross-linked by polyisocyanate, or resin agents such as acrylic or vinyl acetate which become sticky as being dissolved before sticking of metal or metal compound granules.

In order to improve the decorativeness of the decorative sheet 10, it is preferred to form a relatively thick sticky layer 12, and further form irregularities on the surface of the sticky layer since enough decorative effect is not obtained merely by sticking granules to the flat sheet-like support member 11. For this purpose, it is effective to form the sticky layer 12 itself as a mixture layer having a mixing material such as metal or metal compound granules mix in a sticky agent, and to form irregularities on its surface. As a result, by the irregularities of the mixing material itself to be mixed, irregularities can be formed on the surface of the decorative sheet 10. At this time, if the granules are too fine, effective irregularities can not be formed, and hence the size of granules is required to be at least 0.2. to 0.5 mm in diameter. In addition, the irregularities may be also formed on the surface by external transfer or processing. The mixing material to be mixed in the sticky layer 12 is not required to be the same granules as in the metal exposed layer 13 mentioned above, but other metal or nonmetallic material may be used. For example, it is possible to mix in metal oxide such as Alundum (Al₂O₃) , pigment such as barium sulfate, spherical matter such as PMMA resin, polyvinyl alcohol solid powder, wood chips, and the like.

Without mixing in such a mixing material, the irregularities may be formed on the surface of the sticky layer 12 by another method. For example, a peelable silicone layer may be formed on a foamed surface layer having embossed and irregular surface such as wallpaper, in which the surface is coated with resin to form a solid resin layer, and an irregular surface is obtained by peeling off the embossed and irregular surface carrier.

The sheet-like support member 11 is preferably a solvent-resistant film having a proper strength. Examples include polyester film, PVC film, PPS film, and plastic film such as OP or PE polyolefin film. When the surface to be decorated is a three-dimensional curved surface, it is effective to use a stretchable film such as soft PVC or nitride cotton containing plasticizer.

The adhesive layer 14 is desired to have a strong adhesion, and examples include acrylic adhesive, rubber adhesive of natural, chloroprene, NBR, SBR, IIR, or EPDM system, and urethane or silicone adhesive.

The releasing layer 15 may be formed with a general material such as a paper laminated with PE and coated with a silicone releasing agent, or may be a film support type layer.

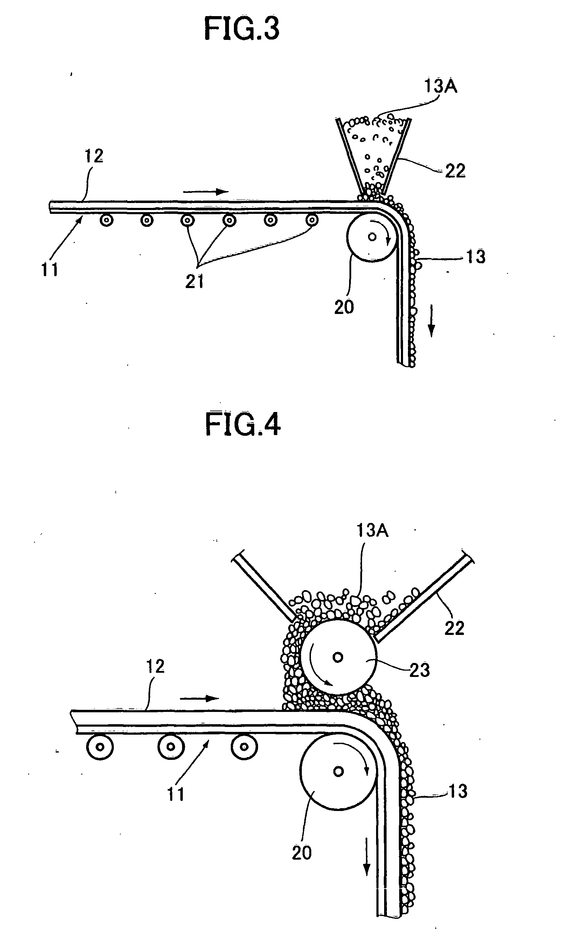

Figs. 3 and 4 are explanatory views of a method of manufacturing the decorative sheet according to embodiments of the present invention. The embodiment shown in Fig. 3 comprises a step of dusting metal or metal compound granules 13A over a sticky layer 12 while conveying the sheet-like support member 11 coated with the sticky layer 12 by a conveying roller 20. In this step, a hopper 22 is disposed above the conveying roller 20 for the sheet-like support member 11 which moves on support rollers 21, and by releasing an opening of this hopper 22, the metal or metal compound granules 13A are dusted over the sticky layer 12, so that the metal exposed layer 13 is formed.

An example of forming the sticky layer 12 prior to forming of the metal exposed layer 13 will be explained. A proper quantity of a mixed solution of metal or metal compound granules, sticky agent, curing agent, organic solvent, and the like is applied on the sheet-like support member 11 by using a roll coater or comber coater, and dried at low temperature of about 60 to 80°C, thereby obtaining the sticky layer 12 having stickiness on the surface. Alternatively, after forming an irregular base layer on the sheet-like support member 11, a sticky layer may be newly applied thereon. Alternatively, after forming a hardened layer with a resin agent such as acrylic or vinyl acetate dissolved by a solvent to have stickiness, it may be immersed in a soluble solvent before forming the metal exposed layer 13, so that it can be half-dissolved or swollen so as to have stickiness.

Fig. 4 shows another embodiment of the present invention, using an apparatus having substantially the same structure as mentioned above. In this embodiment, an adsorbing roller 23 is provided at the opening of the hopper 22, wherein the metal or metal compound granules 13A stored in the hopper 22 are adsorbed by the adsorbing roller 23, and the metal or metal compound granules 13A in the adsorbed state are transferred onto the sticky layer 12 according to a rotation of the absorbing roller 23. The adsorbing roller 23 is composed of a magnetic roller when handling iron granules, or it may be composed of a roller having an adhesive layer formed on the surface in the case of copper granules or the like.

In the manufacturing method according to this embodiment, irregularities are formed on the surface of the adsorbing roller 23, which are transferred onto the sticky layer 12 through a pressuring or heating method, and then by supplying the adsorbed metal or metal compound granules 13A thereon, the irregularities can be formed on the surface of the metal exposed layer 13. This also makes it possible to form a decorative sheet having an efficient decorative effect, and assure mass producibility.

After forming such a metal exposed layer 13, themetal exposed layer 13 may be immersed in an oxidizing solution so as to execute an initial oxidizing process, or without making such process, the process may depend on natural promotion of oxidation.

According to the above-mentioned features of the present invention, provided is a decorative sheet having a metal exposed layer 13 composed of metal or metal compound granules always exposed to ambient environments. Accordingly, the metal exposed layer 13 changes its appearance in the time course while promotingoxidationandotherreactions. Thetime-coursechanges in appearance of the metal or metal compound provide the color tone with a deeper feel to create a quiet atmosphere, so that an effective decoration is realized. Besides, since the appearance changes progress without stopping, it is possible for viewers to enjoy the changes without boringness. Still more, it can be used for a long time without requiring maintenance, so that an effective decorative sheet with a high cost performance can be obtained.

## Claims

1. A decorative sheet (10) for a building construction, comprising a sheet-like support member (11), a sticky layer (12) formed on one side of the sheet-like support member, and a metal exposed layer (13) formed of metal or metal compound granules stacked on the sticky layer, wherein the metal exposed layer has an exposed surface so that the metal or the granules can be oxidized
**characterized in that**
the sheet like support member is a plastic film, and
the sticky layer is a layer having an irregular surface on a surface thereof.

2. The decorative sheet according to claim 1, wherein
a mixing material for forming the irregular surface on the surface thereof is mixed in a sticky agent for forming the sticky layer.

3. The decorative sheet according to claim 1, wherein
the mixing material is any one of metal oxide such as Alundum (Al₂O₃), pigment such as barium sulfate, spherical matter such as PMMA resin, polyvinyl alcohol solid powder, and wood chips.

4. The decorative sheet according to any one of claims 1 to 3, further comprising an adhesive layer (14) formed on the other side of the sheet-like support member.

5. A method of manufacturing a decorative sheet (10) for a building construction, comprising the steps of:
forming a sheet-like support substrata (11), and then a sticky layer (12) on one side of the sheet-like support substrate;
gluing metal or metal compound granules on the sheet-like support substrate through the sticky layer (12); and
forming a metal exposed layer (13) with the surface exposed so that the metal or the granules can be oxidized.
**characterized in that**
irregularities are formed on the sticky layer prior to the step of forming the metal exposed layer.

6. The method of manufacturing a decorative sheet according to claim 5, wherein
a peelable silicone layer is formed on a foamed surface layer having embossed and irregular surface so as to form the irregularities on the sticky layer, in which the surface is coated with resin to form a solid resin layer, and the irregular surface is obtained by peeling off the embossed and irregular surface carrier.

7. The method of manufacturing a decorative sheet according to claim 5, wherein
the sticky layer is a layer in which a mixing material made of any of a metal, metal compound granules, pigment, resin granules, wood chips is mixed in a sticky agent for forming the sticky layer, the sticky layer being formed on the sheet-like support substrate prior to the step of forming the metal exposed layer.

8. The method of manufacturing a decorative sheet according to claim 5, wherein
the step of forming the metal exposed layer comprises the steps of supplying the sheet-like support substrate between a conveying roller (20) of the sheet-like support substrate and an adsorbing roller (23) having the metal or metal compound granules adsorbed on a surface thereof, and gluing the metal or metal compound granules adsorbed on the adsorbing roller on the sticky layer.

9. The method of manufacturing a decorative sheet according to claim 8, wherein
irregularities are formed on the surface of the adsorbing roller, and irregularities are formed on the metal exposed layer by transferring the irregularities of the adsorbing roller on the sticky layer.

## Patentansprüche

1. Dekorschicht (10) für eine Bauausführung, aufweisend ein bahnenförmiges Unterstützungselement (11), eine Haftschicht (12), die auf einer Seite von dem bahnenförmigen Unterstützungselement geformt ist, und eine metallische Sichtschicht (13), die aus Metall oder Metallverbundgranulat geformt ist, welches auf die Haftschicht aufgebracht ist, wobei die metallische Sichtschicht eine exponierte Oberfläche hat, sodass das Metall oder das Granulat oxidiert werden kann,
**dadurch gekennzeichnet,**
**dass** das bahnenförmige Unterstützungselement eine Kunststofffolie ist, und
die Haftschicht eine Schicht ist, die eine unregelmäßige Oberfläche auf einer ihrer Oberflächen hat.

2. Dekorschicht nach Anspruch 1, wobei
ein Mischmaterial zum Bilden der unregelmäßigen Oberfläche auf ihrer Oberfläche unter ein Haftmittel zum Formen der Haftschicht gemischt ist.

3. Dekorschicht nach Anspruch 1, wobei
das Mischmaterial Metalloxid, wie etwa Alundum (Al₂O₃), Pigment,
wie etwa Bariumsulfat, sphärisches Material, wie etwa PMMA Granulat, Polyphenyl Alkohol festes Pulver oder Holzschnitzel ist.

4. Dekorschicht nach einem der Ansprüche 1 bis 3, ferner aufweisend eine Klebeschicht (14), die auf der anderen Seite des bahnenförmigen Unterstützungselements geformt ist.

5. Herstellungsverfahren für eine Dekorschicht (10), für eine Bauausführung, wobei es die Schritte aufweist:
Formen eines bahnenförmigen Unterstützungssubstrats (11), und dann einer Haftschicht (12) auf einer Seite des bahnenförmigen Unterstützungssubstrats;
Kleben von Metall oder Metallverbundgranulat mittels der Haftschicht (12) auf das bahnenförmige Unterstützungssubstrat; und
Formen einer metallischen Sichtschicht (13) mit der Oberfläche exponiert, sodass das Metall oder das Granulat oxidiert werden kann,
**dadurch gekennzeichnet,**
**dass** Unregelmäßigkeiten vor dem Schritt des Formens der metallischen Sichtschicht auf der Haftschicht geformt werden.

6. Herstellungsverfahren für eine Dekorschicht nach Anspruch 5, wobei eine abziehbare
Silikonschicht auf einer geschäumten Oberflächenschicht geformt ist, welche eine geprägte und unregelmäßige Oberfläche hat, um die Unregelmäßigkeiten auf der Haftschicht zu formen, wobei die Oberfläche mit Harz bedeckt ist, um eine feste Harzschicht zu formen, und die unregelmäßige Oberfläche durch Abziehen des geprägten und unregelmäßigen Oberflächenträgers gewonnen wird.

7. Herstellungsverfahren für eine Dekorschicht nach Anspruch 5, wobei
die Haftschicht eine Schicht ist, in welche ein Mischmaterial in ein Haftmittel zum Formen der Haftschicht gemischt ist, wobei das Mischmaterial aus einem Metall, Metallverbundgranulat, Pigment, Harzgranulat oder Holzschnitzeln gemacht ist, und wobei die Haftschicht auf dem bahnenförmigen Unterstützungssubstrat vor dem Schritt des Formens der metallischen Sichtschicht geformt wird.

8. Herstellungsverfahren für eine Dekorschicht nach Anspruch 5, wobei
der Schritt des Formens der metallischen Sichtschicht die Schritte Zuführen des bahnenförmigen Unterstützungssubstrats zwischen einer Transportrolle (20) des bahnenförmigen Unterstützungssubstrats und einer Adsorptionsrolle (23), welche das Metall oder Metallverbundgranulat auf einer ihrer Oberflächen adsorbiert hat, und Kleben des auf der Adsorptionsrolle adsorbierten Metalls oder Metallverbundgranulats auf die Haftschicht.

9. Herstellungsverfahren für eine Dekorschicht nach Anspruch 8, wobei
Unregelmäßigkeiten auf der Oberfläche der Adsorptionsrolle geformt sind, und durch Übertragen der Unregelmäßigkeiten auf der Adsorptionsrolle auf die Haftschicht Unregelmäßigkeiten auf der metallischen Sichtschicht geformt werden.

## Revendications

1. Feuille décorative (10) pour la construction d'un bâtiment, comprenant un élément support similaire à une feuille (11), une couche collante (12) formée sur un côté de l'élément support similaire à une feuille, et une couche exposée de métal (13) constituée de grains de métal ou de composé métallique empilés sur la couche collante, dans lequel la couche exposée de métal présente une surface exposée, de telle sorte que le métal ou les grains puissent être oxydés,
**caractérisée en ce que**
l'élément support similaire à une feuille est un film plastique, et
la couche collante est une couche présentant une surface irrégulière sur sa surface.

2. Feuille décorative selon la revendication 1, dans laquelle
un matériau de mélange destiné à former la surface irrégulière sur une surface de celle-ci est mélangé à un agent collant afin de former la couche collante.

3. Feuille décorative selon la revendication 1, dans laquelle
le matériau de mélange est l'un quelconque d'un oxyde métallique tel que l'alundum (Al₂O₃), un pigment tel que le sulfate de baryum, une matière sphérique telle que la résine de PPMA, une poudre solide d'alcool polyvinylique, et des copeaux de bois.

4. Feuille décorative selon l'une quelconque des revendications 1 à 3, comprenant en outre une couche adhésive (14) formée sur l'autre côté de l'élément support similaire à une feuille.

5. Procédé de fabrication d'une feuille décorative (10) pour la construction d'un bâtiment, comprenant les étapes consistant à :
former un substrat support similaire à une feuille (11), puis une couche collante (12) sur un côté du substrat support similaire à une feuille ;
coller les grains de métal ou de composé métallique adsorbés sur le substrat support similaire à une feuille à travers la couche collante (12) ; et
former une couche exposée de métal (13), la surface étant exposée de telle sorte que le métal ou les grains puissent être oxydés,
**caractérisé en ce que**
des irrégularités sont formées sur la couche collante avant l'étape de formation de la couche exposée de métal.

6. Procédé de fabrication d'une feuille décorative selon la revendication 5, dans lequel
une couche de silicone pelable est formée sur une couche de surface alvéolée présentant une surface gaufrée et irrégulière de façon à former les irrégularités sur la couche collante, dans lequel la surface est revêtue de résine pour former une couche de résine solide, et la surface irrégulière est obtenue en retirant par pelage le support de la surface gaufrée et irrégulière.

7. Procédé de fabrication d'une feuille décorative selon la revendication 5, dans lequel
la couche collante est une couche dans laquelle un matériau de mélange constitué de l'un quelconque d'un métal, de grains de composé métallique, d'un pigment, de grains de résine, de copeaux de bois est mélangé dans un agent collant afin de former la couche collante, la couche collante étant formée sur le substrat support similaire à une feuille avant l'étape de formation de la couche exposée de métal.

8. Procédé de fabrication d'une feuille décorative selon la revendication 5, dans lequel
l'étape de formation de la couche exposée de métal comprend les étapes de fourniture du substrat support similaire à une feuille entre un rouleau de transport (20) du substrat support similaire à une feuille et un rouleau absorbant (23) présentant les grains de métal ou de composé métallique adsorbés sur une surface de celui-ci, et collant les grains de métal ou de composé métallique adsorbés sur le rouleau absorbant sur la couche collante.

9. Procédé de fabrication d'une feuille décorative selon la revendication 8, dans lequel
des irrégularités sont formées sur la surface du rouleau absorbant, et des irrégularités sont formées sur la couche exposée de métal par transfert des irrégularités du rouleau absorbant sur la couche collante.
